# EUROPÄISCHE PATENTSCHRIFT

(11) **EP 1 932 414 B1**
(45) Veröffentlichungstag und Bekanntmachung des Hinweises auf die Patenterteilung: **17.02.2010**
(21) Anmeldenummer: 07023961.1
(22) Anmeldetag: 11.12.2007
(51) Int. Cl.: A01D 34/66, A01B 73/04

(54) **Mähmaschine zur frontseitigen Anordnung an einem landwirtschaftlichen Fahrzeug**
Mowing machine to be placed on the front end of an agricultural automobile
Faucheuse destinée à être placée au front d'un véhicule agricole

(30) Priorität: 13.12.2006 DE 102006059220
(43) Veröffentlichungstag der Anmeldung: 18.06.2008
(73) Patentinhaber: CLAAS Saulgau GmbH, 88348 Bad Saulgau (DE)
(72) Erfinder: Loebe, Stefan, 88348 Bad Saulgau (DE)
(74) Vertreter: Roth, Klaus

(56) Entgegenhaltungen:
- EP-A- 0 383 392
- EP-A- 0 992 187
- EP-A- 1 495 662
- DE-A1- 4 106 811
- US-A1- 2004 182 060

## Beschreibung

Frontmähwerke für landwirtschaftliche Fahrzeuge wie Traktoren oder dergleichen sind in unterschiedlichen Ausführungen bereits bekannt. In der Druckschrift DE 101 57 289 A1 wird beispielsweise eine gelenkige Verbindung von Scheibenmähbalken beschrieben, um ein mehrteiliges Mähwerk zu gestalten.

In der Druckschrift DE 42 25 249 A1 ist ein Heckmähwerk beschrieben, dass aus drei gegeneinander verschwenkbaren Mähwerken besteht, wobei eine Aufhängung für die Mähwerke vorgeschlagen wird, die eine gute Bodenkopie ermöglichen soll.

Bei Mähmaschinen für den Frontanbau wird üblicherweise ein zentrales Hauptmähwerk vorgesehen, dass quer zur Fahrtrichtung angeordnet ist. Da derartige Mähwerke beim Übergang von der Arbeits- in die Transportstellung lediglich angehoben werden, ist die Arbeitsbreite gleich der Transportbreite. Bei Mäharbeiten in Hanglagen, bei denen quer zur Hangneigung gefahren wird, ergibt sich eine leichte Schrägstellung des Fahrzeugs gegenüber der Fahrtrichtung. Bei Frontmähwerken, deren Arbeitsbreite nicht breiter ist als das Fahrzeug, ergibt sich dabei der Nachteil, dass stehendes, nicht gemähtes Erntegut von dem nachfolgenden Fahrzeug. überfahren und niedergedrückt wird. Der gleiche Nachteil entsteht auch bei Kurvenfahrten.

Dieser Nachteil wird bei Frontmähmaschinen, die eine größere Arbeitsbreite gegenüber der Transportbreite aufweisen, vermieden. Eine derartige Frontmähmaschine ist beispielsweise in der Druckschrift DE 41 06 811 A1 beschrieben.

In dieser Druckschrift wird die Transportbreite eines Trommelmähwerks gegenüber der Arbeitsbreite dadurch verringert, dass die äußeren Mähkreisel aus der Horizontalebene heraus bewegt werden und so weit in Richtung auf die inneren Mähkreisel verschoben werden, bis die äußeren Mähteller an die zylinderförmigen Mäntel der inneren Mähkreisel heranreichen.

Diese Ausführung gemäß dem Stand der Technik erlaubt nur eine geringe Vergrößerung der Arbeitsbreite gegenüber der Transportbreite. Darüber hinaus weisen Trommelmähwerke ein erhebliches Gewicht und vergleichsweise große Abmessungen in Fahrtrichtung auf, so dass eine solche Ausführung eine entsprechende Achslast für die Vorderachse mit sich bringt.

Die Erfindung hat daher die Aufgabe, eine Frontmähmaschine mit unterschiedlicher Arbeits- und Transportbreite bei kleinerem Gewicht vorzuschlagen.

Diese Aufgabe wird, ausgehend von einem Stand der Technik der einleitend genannten Art, durch die kennzeichnenden Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Frontmähmaschine für ein landwirtschaftliches Fahrzeug dadurch aus, dass ein Frontmähwerk als Scheibenmähwerk mit außenliegendem Antrieb für die Mähwerkzeuge vorgesehen ist. Für den Übergang zwischen einer Transportstellung und einer Arbeitsstellung ist ein gegenüber dem Frontmähwerk beweglich angeordnetes Seitenmähwerk vorgesehen. Der Antrieb des Seitenmähwerks ist dabei wenigstens in der Arbeitsstellung an den außenliegenden Antrieb des Frontmähwerks angeschlossen.

Die Verwendung eines Scheibenmähwerks mit außenliegendem Antrieb bringt dabei verschiedene Vorteile mit sich. Ein solches Mähwerk ist leichter als ein Trommelmähwerk. Da der Antrieb eines Scheibenmähwerks außenliegend nach unten zu den Mähwerkzeugen geführt ist, kann ein dazu benachbart angeordnetes bewegliches Seitenmähwerk unmittelbar an diesen außenliegenden Antrieb angeschlossen werden. Ein zentrales Verteilergetriebe, an das unmittelbar die Antriebe der einzelnen Mähwerke der Mähmaschine angeschlossen werden, ist somit entbehrlich, da der Antriebsstrang des Frontmähwerks die außenliegende Anschlussmöglichkeit für ein daran anschließendes Seitenmähwerk bietet.

Die Erfindung ist besonders vorteilhaft bei Frontmähmaschinen einsetzbar, bei denen das Frontmähwerk mittig vor dem Fahrzeug angeordnet ist. Derartige Frontmähwerke werden beim Übergang zwischen der Arbeitsposition in die Transportstellung lediglich vom Boden abgehoben bzw. auf diesen abgesenkt. Die Transportbreite entspricht demnach zugleich der Arbeitsbreite dieser Frontmähwerke.

Durch die permanente Queranordnung vor dem zugehörigen Fahrzeug bleibt auch die Position des außenliegenden Antriebs im Falle eines Scheibenmähwerks wie oben angeführt bezüglich des Abstandes von der Mittelachse des Fahrzeugs im Wesentlichen unverändert. Ein Seitenmähwerk lässt sich demnach an ein solches Frontmähwerk besonders einfach anschließen, da keine größeren Bewegungen des Frontmähwerks beim Übergang in die Transportstellung für den Anschluss des Antriebs des Seitenmähwerks zu berücksichtigen sind.

Vorzugsweise wird das Frontmähwerk dabei so ausgebildet, dass seine Breite im Wesentlichen der Breite des zugehörigen Fahrzeugs entspricht. Eine solche Ausbildung bedeutet eine maximale Ausnutzung der möglichen Arbeitsbreite eines sowohl in Transport- als auch in Arbeitsstellung quer vor dem Fahrzeug angeordneten Frontmähwerks. Zugleich bedeutet jedoch eine derartige maximale Breite des Frontmähwerks, dass ein oder mehrere Seitenmähwerke beim Übergang in die Transportstellung soweit in Richtung zur Fahrzeugmittelachse hinbewegt, z. B. verschwenkt werden, dass kein seitlicher Überstand mehr neben dem Frontmähwerk mit maximaler Transportbreite verbleibt.

Eine solche Beweglichkeit des Seitenmähwerks gegenüber dem Frontmähwerk stellt gewisse Anforderungen an den Anschluss des Antriebs des Seitenmähwerks im Hinblick auf die Beweglichkeit der Mähwerke relativ zueinander.

Bevorzugt wird hierfür der Antrieb des Seitenmähwerks wenigstens in der Arbeitsstellung an ein außenliegendes Getriebe des Frontmähwerks angeschlossen. Bei bekannten Scheibenmähwerken befindet sich in der Regel ein derartiges außenliegendes Getriebe oberhalb der Mähwerkzeuge, die über eine nach unten führende Antriebswelle des Getriebes angetrieben werden. Der Antriebsstrang eines solchen Scheibenmähwerks liegt also zunächst mit einer gewissen Höhe oberhalb von den Arbeitswerkzeugen beabstandet und wird durch ein außenliegendes Winkelgetriebe nach unten zu den Mähwerkzeugen geführt. Die Mähwerkzeuge bilden wiederum einen durchgehenden Mähbalken, der in Arbeitsstellung-auf dem Boden entlang geführt wird. Zwischen den Mähwerkzeugen und dem oberhalb beabstandeten Teil des Betriebsstrangs befindet sich ein freier Zwischenraum, durch den das Mähgut von der Vorderseite des Mähwerks an dessen Rückseite gelangt, wo es z. B. mit einem Konditionierer weiterverarbeitet wird oder auf dem Boden zum Liegen kommt.

In einer bevorzugten Weiterbildung der Erfindung wird nunmehr dieses außenliegende Getriebe derart weitergebildet, dass der Antrieb eines benachbarten Seitenmähwerks daran angeschlossen werden kann. Der Antriebstrang des Frontmähwerks wird dadurch in das Seitenmähwerk verlängert, so dass für das Seitenmähwerk erfindungsgemäß kein von einem zentralen Verteilergetriebe ausgehender separater Antriebsstrang mehr erforderlich ist.

Durch die Verlängerung des Antriebsstrangs des Frontmähwerks in das Seitenmähwerk ergibt sich somit eine platz- und gewichtssparende Antriebskonstruktion.

Um eine möglichst große Beweglichkeit zwischen den Mähwerken zu ermöglichen, wird vorteilhafterweise zudem eine lösbare Kupplung zwischen dem Antrieb des Frontmähwerks und dem Antrieb des Seitenmähwerks vorgesehen. Bei Verwendung einer lösbaren Kupplung sind der Beweglichkeit des Seitenmähwerks für einen Übergang in eine Transportstellung zumindest von Seiten des Antriebs her keine Grenzen mehr gesetzt. Das Seitenmähwerk kann Verschiebungen und Schwenkbewegungen nahezu unabhängig vom Antriebsstrang ausführen, es muss lediglich beim Übergang in die Arbeitsstellung zum erforderlichen Kraftschluss mit dem Antrieb des Frontmähwerks kommen.

Die Verwendung einer lösbaren Kupplung ermöglicht beispielsweise Schwenkbewegungen eines Seitenmähwerks um wenigstens eine Schwenkachse mit einem sehr großen Schwenkbereich, z. B. von im Wesentlichen 90° oder mehr, beispielsweise 180°. Derartige große Schwenkwinkel sind bei durchgehend geschlossenem Antrieb nur schwer realisierbar. Bevorzugt wird eine solche Schwenkachse zumindest in Arbeitsstellung im Wesentlichen horizontal angeordnet, so dass das Seitenmähwerk über das Frontmähwerk schwenkbar ist.

In einer besonderen Ausführungsform der Erfindung ist die Kupplung zwischen dem Antrieb des Frontmähwerks und dem Antrieb des Seitenmähwerks beim Übergang von der Arbeitsstellung in die Transportstellung selbsttätig lösbar und/oder beim Übergang von der Transportstellung in die Arbeitsstellung selbsttätig schließbar. Auf diese Weise braucht die lösbare Kupplung keine Steuermittel, um die Kupplung aktiv zu betätigen. Für eine solche Kupplung kommt beispielsweise eine Klauenkupplung in Frage, die mittels eines Kraftelementes, beispielsweise einer Druckfeder, in Arbeitsstellung beim Drehen des Antriebs einrastet, sofern die Klauen nicht bereits ohnehin in entsprechender Winkellage ineinander eingegriffen haben. Eine Klauenkupplung kann darüber hinaus ohne Weiteres beim Auseinanderfahren der beiden Kupplungsteile selbsttätig gelöst werden.

Vorzugsweise wird die Kupplung nur in einer bestimmten Phasenlage zwischen dem Mähwerkzeug und dem Mähwerkzeug des Seitenmähwerks schließbar ausgebildet. Dies ist von besonderer Bedeutung, wenn die Flugkreise benachbarter Mähwerkzeuge, d. h. des Frontmähwerks einerseits und des Seitenmähwerkzeugs andererseits, sich einander überlappen sollen. Ein solcher Überlapp ist für eine durchgehende Arbeitsbreite wiederum wünschenswert.

Bei einem Überlapp der Flugkreise der Mähwerkzeuge ist die Phasenlage derartiger Mähwerkzeuge von Bedeutung, um ein Aneinanderstoßen zu vermeiden. Eine solche Phasenlage kann beispielsweise durch eine Klauenkupplung wie oben angeführt gewährleistet werden.

Bei den handelüblichen Scheibenmähwerken gibt es dabei über eine volle Umdrehung eines Mähwerkzeugs zwei geeignete Phasenlagen, die zueinander um 180° versetzt sind. Eine solche Phasenlage kann beispielsweise durch eine Klauenkupplung realisiert werden, die zwei um 180° versetzte Raststellungen beinhaltet. Sofern allerdings ein Übersetzungsgetriebe verwendet wird, muss auf anderweitige Weise die relative Winkellage der Mähwerkzeuge zueinander benachbarter Mähwerke gewährleistet werden.

Wie bereits oben angeführt, wird das Seitenmähwerk bevorzugt so in Transportstellung geschwenkt, dass es innerhalb der Transportbreite des ersten Frontmähwerks in der Transportstellung zum Liegen kommt. Dies ist vor allem dann von Vorteil, wenn das Frontmähwerk bereits die maximal zulässige Transportbreite einnimmt.

Hierzu werden das oder die Seitenmähwerke beim Übergang zwischen Transport- und Arbeitsstellung vorzugsweise um einen Schwenkwinkel von mindestens 90° schwenkbar ausgebildet. Eine Verschwenkbarkeit eines Seitenmähwerks für eine Transportstellung innerhalb der Transportbreite eines quer vor dem Fahrzeug angeordneten Frontmähwerk ist beispielsweise durch einen Schwenkwinkel um ungefähr 90° um wenigstens eine im Wesentlichen horizontal liegende Drehachse möglich. In diesem Fall kommt das Seitenmähwerk über dem Frontmähwerk in der Transportstellung zum Liegen und kann sich somit vollständig innerhalb der Transportbreite des Frontmähwerks befinden.

Bei einem Schwenkwinkel von 90° steht das Seitenmähwerk in Transportstellung nach oben. Handelt es sich dabei um ein kurzes Mähwerk, ist dies problemlos möglich. Bei einem Seitenmähwerk mit größerer Arbeitsbreite ist es dagegen sinnvoll, dieses weiter zu verschwenken, so dass es flacher über das Frontmähwerk gefaltet wird. Die Transporthöhe der Mähmaschine und die Sichtbeeinträchtigung für den Fahrer wird dadurch verringert. Gegebenenfalls verschwenkt wenigstens eines der Mähwerke um mindestens zwei voneinander beabstandete Schwenkachsen, um zwischen der Arbeits- und der Transportposition zu wechseln. Der Abstand bzw. ein Abstandselement oder Hebel, das/der zwischen den beiden Schwenkachsen vorgesehen ist, ermöglicht eine Verschwenkung des entsprechenden Mähwerks zum einen um eine vorteilhafte Bahnkurve. Hiermit kann zum Beispiel erreicht werden, dass das Mähwerk besonders weit und/oder in vorteilhafter Weise in Richtung Mitte der Mähmaschine, d.h. nach innen versetzt, verschwenkt wird. Der realisierbare Versatz wird hierbei maßgeblich durch die Länge des Hebels bzw. den Abstand der Schwenkachsen bestimmbar.

Zum anderen kann mit wenigstens zwei voneinander beabstandete Schwenkachsen erreicht werden, dass das entsprechende Mähwerk z.B. um eine der Schwenkachsen weit mehr als 90°, insbesondere 180° oder mehr, verschwenkbar ist und insbesondere lediglich ein einziger Hubzylinder oder dergleichen als Schwenkantrieb ausreicht. Dementsprechend einfach ist die Schwenkkonstruktion ausbildbar bzw. antreibbar und das entsprechende Mähwerk in der Transportstellung in vorteilhafter Weise anordenbar.

Vorteilhafterweise ist wenigstens ein Mähwerk beim Übergang zwischen der Arbeitsstellung und der Transportstellung um vier voneinander beabstandete Schwenkachsen schwenkbar. Dies bedeutet vor allem, dass eine Schwenkeinheit mit vier mittels Hebel bzw. Abstandselemente voneinander beabstandete Schwenkachsen vorgesehen ist. Beispielsweise wird dies mit Hilfe einer ein Parallelogramm- oder Trapezvorrichtung umfassenden Schwenkeinheit verwirklicht. Das heißt, dass die Hebel bzw. Abstandselemente ein Parallelogramm oder Trapez bilden, wobei die vier Schwenkachsen die Ecken dieser Vierecke bilden.

Diese erfindungsgemäße Maßnahme ermöglicht vor allem die Vorteile bzw. Wirkungen von zwei voneinander beabstandete Schwenkachsen nutzbar zu machen und in vorteilhafter Weise zusätzlich eine Führung der Schwenkbewegung des entsprechenden Mähwerks zu gewährleisten. Entsprechend wird das verschwenken zwischen Arbeits- und Transportstellung weiter verbessert bzw. optimiert.

In einer bevorzugten Variante der Erfindung ist das erste und/oder zweite Seitenmähwerk um vier voneinander beabstandete, im Wesentlichen in Fahrtrichtung stehende, horizontal angeordnete Schwenkachse schwenkbar. Somit kann das/die Seitenmähwerke in vorgenannter Weise in der Arbeitsstellung von der Außenseite in die Transportstellung nach innen und vorzugsweise über das Hauptmähwerk bzw. Frontmähwerk verschwenkt werden.

Dagegen würde eine Ausrichtung der Schwenkachse bzw. Schwenkachsen winklig zur Fahrtrichtung zusätzlich eine Bewegung des Mähwerkes, insbesondere der Seitenmähwerke, nach vorne und hinten ermöglichen. Dies ist beispielsweise denkbar, um in der Arbeitsstellung eine V-Anordnung der Mähwerke zu realisieren.

Vorzugsweise werden beidseits eines vorteilhaften Frontmähwerks erfindungsgemäß angetriebene Seitenmähwerke vorgesehen, wobei der Antrieb beider Seitenmähwerke erfindungsgemäß außenseitig am Frontmähwerk anschließbar ist. Auf diese Weise werden die erfindungsgemäßen Vorteile auf beiden Seiten des Frontmähwerks realisiert.

Eine erfindungsgemäße Mähmaschine kann insbesondere so ausgebildet werden, dass die einzelnen Mähwerke wenigstens in Arbeitsstellung auf einer Höhe bezogen auf die Fahrtrichtung angeordnet sind. Hier ergibt sich die erwünschte Gesamtarbeitsbreite bei geringst möglicher Länge in Fahrtrichtung der Mähmaschine. Die Hebelwirkung auf die Vorderachse lässt sich dadurch verringern. Darüber hinaus ist kein großer überlappender Bereich zwischen den einzelnen Mähwerken erforderlich, um in Schrägfahrt oder in Kurvenfahrt ein durchgehendes Schnittbild zu erzeugen. Es reicht vielmehr aus, wenn sich beispielsweise die Flugkreise der benachbarten Mähwerkzeuge zweier Mähwerke überlappen, wie weiter oben bereits erwähnt.

Eine erfindungsgemäße Mähmaschine wird bevorzugt zum Anbau an einem Maschinenaufbau eines Traktors ausgebildet. Die erfindungsgemäßen Vorteile werden jedoch auch bei einer selbstfahrenden Mähmaschine erzielt, bei der die Mähwerke wie vorbeschrieben ausgebildet und angeordnet sind.

Im Einzelnen zeigt:
- Fig. 1: eine schematische Frontansicht eines ersten Scheibenmähwerks gemäß der Erfindung in Transportstellung,
- Fig. 2: eine schematische, perspektivische Darstellung des ersten Scheibenmähwerks gemäß Fig. 1 in einer Zwischenstellung,
- Fig. 3: eine schematische, perspektivische Darstellung des ersten Scheibenmähwerks gemäß Fig. 1 in der Arbeitsstellung,
- Fig. 4: eine schematische Frontansicht eines zweiten Scheibenmähwerks gemäß der Erfindung in der. Transportstellung,
- Fig. 5: eine schematische Seitenansicht des zweiten Scheibenmähwerks gemäß Fig. 4 und
- Fig. 6: eine schematische, perspektivische Darstellung des zweiten Scheibenmähwerks gemäß Fig. 4 in der Arbeitsstellung.

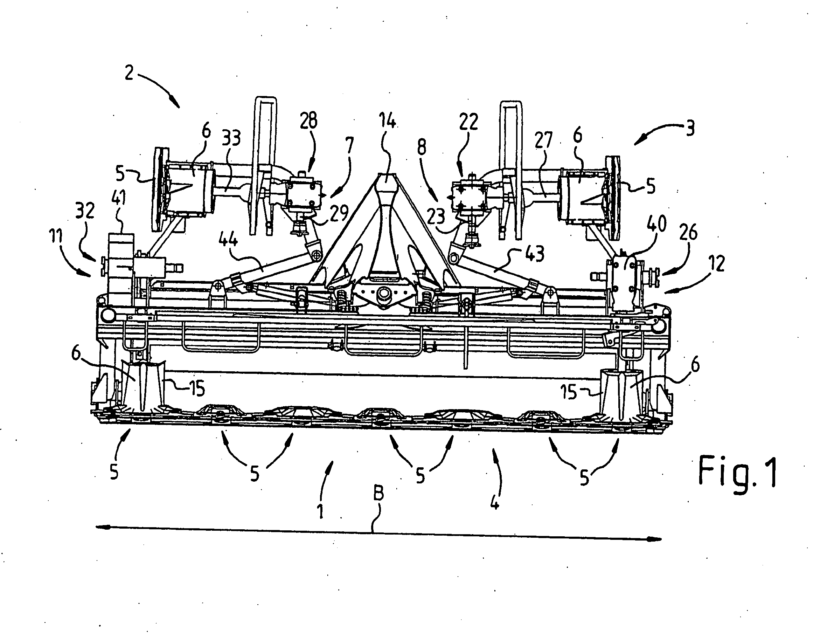

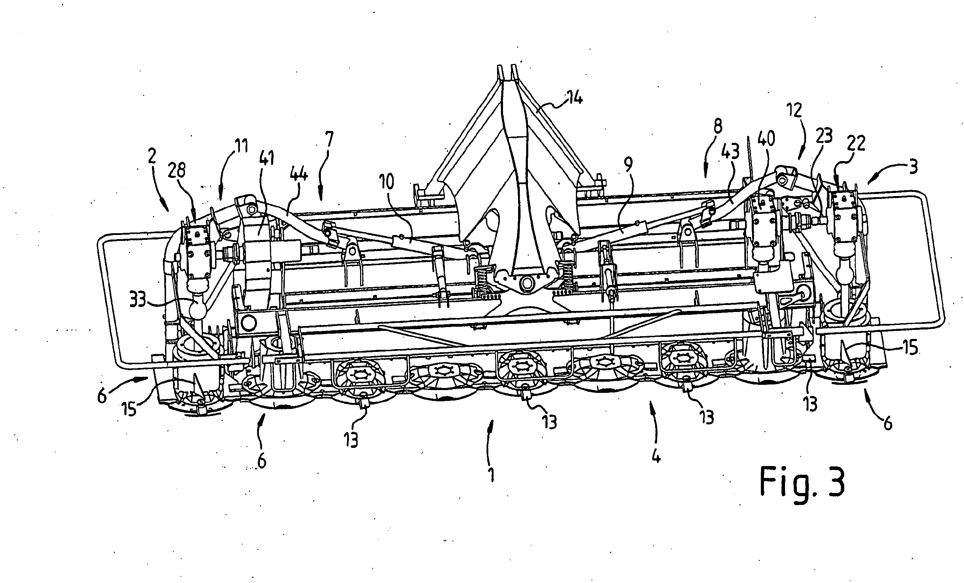

In den Figuren 1 bis 3 ist eine erste Variante einer Mähmaschine bzw. eines Scheibenmähwerks gemäß der Erfindung schematisch dargestellt. Bei dieser Variante weist das Scheibenmähwerk ein zentrales Hauptmähwerk 1 auf, an dem in der Arbeitsstellung gemäß Fig. 3 stirnseitig zwei Seitenmähwerke 2 bzw. 3 angeordnet sind.

Das Hauptmähwerk 1 weist einen Mähbalken 4 mit mehreren Mähscheiben 5 auf, die jeweils um eine nicht näher dargestellte Drehachse rotieren. Die beiden äußersten Mähscheiben 5 des Hauptmähwerks 1 sind als Trommelscheiben ausgebildet, wobei diese eine Fördertrommel 6 umfassen. Die Fördertrommeln 6 befördern mittels Förderelementen 15 das abgemähte Mähgut in Richtung Mitte des Hauptmähwerks 1, so dass Laufräder eines nicht näher dargestellten Traktors das abgemähte Mähgut nicht überfahren.

In Fig. 1 wird deutlich, dass die beiden Seitenmähwerke 2, 3 in der dargestellten Transportposition derart angeordnet sind, dass diese innerhalb einer Breite B des Hauptmähwerks 1 liegen bzw. sich innerhalb der Kontur des Hauptmähwerks 1 befinden, wobei im dargestellten Fall die Kontur in der Rotationsebene gemeint ist.

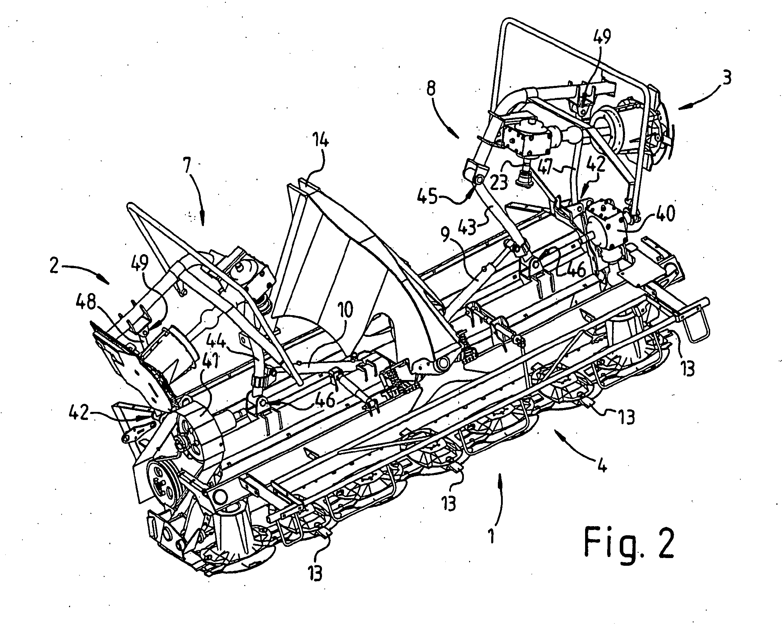

Die erfindungsgemäße Anordnung der beiden Seitenmähwerke 2, 3 erfolgt über zwei Klappvorichtungen 7, 8, die jeweils einen Hubzylinder 9, 10 aufweisen, so dass ein Fahrer vom Fahrersitz aus automatisch die Seitenmähwerke 2, 3 von der Transportposition gemäß Fig. 1, über eine Zwischenstellung gemäß Fig. 2, in die Arbeitsstellung gemäß Fig. 3 verstellen bzw. klappen kann.

Die Übertragung der Antriebsenergie für die beiden Seitenmähwerke 2, 3 erfolgt mittels zweier Kupplungen 11, 12, die in vorteilhafter Weise als Klauenkupplungen ausgebildet sind. Durch das Ineinandergreifen von einer Nut und einer Feder bzw. der Klauen wird die Winkelstellung von Messern 13 des Hauptmähwerks 1 in Bezug zu denen der Seitenmähwerke 2, 3 eindeutig festgelegt, was für einen sauberen Schnitt wichtig ist.

Vor allem in Fig. 3 wird deutlich, dass hier die Mähscheibe 5 bei dieser Ausführungsform jeweils zwei Messer 13 aufweist, die in Bezug zu den Messern 13 einer benachbarten Messscheibe 5 um 90 Grad versetzt angeordnet sind. Diese versetzte Anordnung wird vor allem durch die Klauenkupplungen 11, 12 für die Seitenmähwerke 2, 3 definiert.

Das Scheibenmähwerk wird vorzugsweise als Frontmähwerk an einer Zugmaschine wie einem Schlepper oder dergleichen angeordnet, wobei hierfür eine standardisierte Dreieckkupplung bzw. Aufhängung 14 sowie eine nicht näher dargestellte Zapfwelle vorgesehen ist.

Weiterhin können hydraulische und/oder elektrische Verbindungen oder dergleichen zur Zugmaschine vorgesehen werden, um z. B. ein automatisches Verstellen der Seitenmähwerke 2, 3 von der Arbeitsstellung in die Transportstellung und zurück zu bewirken. Alternativ können auch die Seitenmähwerke 2, 3 manuell verstellt und gegebenenfalls in der Arbeitsstellung bzw. in der Transportstellung fixiert werden.

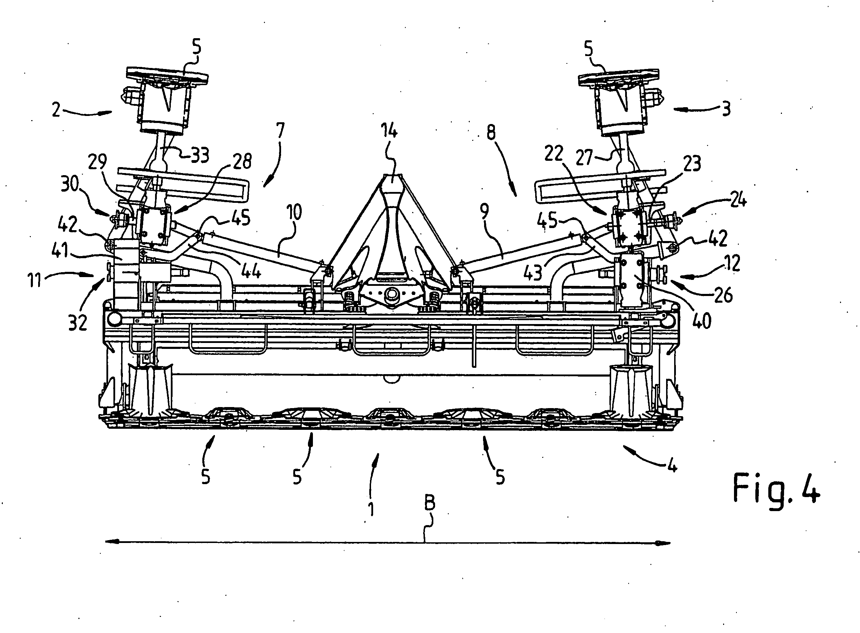

In Fig. 1 wird deutlich, dass die Mähscheiben 5 bzw. die Rotationsebenen der Messer 13 der Seitenmähwerke 2, 3 in der Transportstellung im Wesentlichen vertikal und in Fahrtrichtung ausgerichtet sind. Bei der zweiten Variante des Scheibenmähwerks gemäß der Erfindung, die in den Figuren 4 bis 6 dargestellt ist, wird deutlich, dass die Mähscheiben 5 der beiden Seitenmähwerke in der Transportstellung gemäß Fig. 4 im Wesentlichen parallel zu den Mähscheiben 5 des Hauptmähwerks 1 ausgerichtet sind. Das heißt, die Mähscheiben 5 bzw. die Rotationsebene der Messer 13 der beiden Seitenmähwerke 2, 3 ist im Wesentlichen horizontal in der Transportstellung ausgerichtet.

Dementsprechend sind die Klappvorrichtungen 7, 8 bei der zweiten Variante des Scheibenmähwerks gemäß der Erfindung entsprechend andersartig realisiert. Im Wesentlichen identisch, wie bei der ersten Variante gemäß den Fig. 1 bis 3, sind die Klauenkupplungen 11, 12 sowie der Mähbalken 4 etc. realisiert.

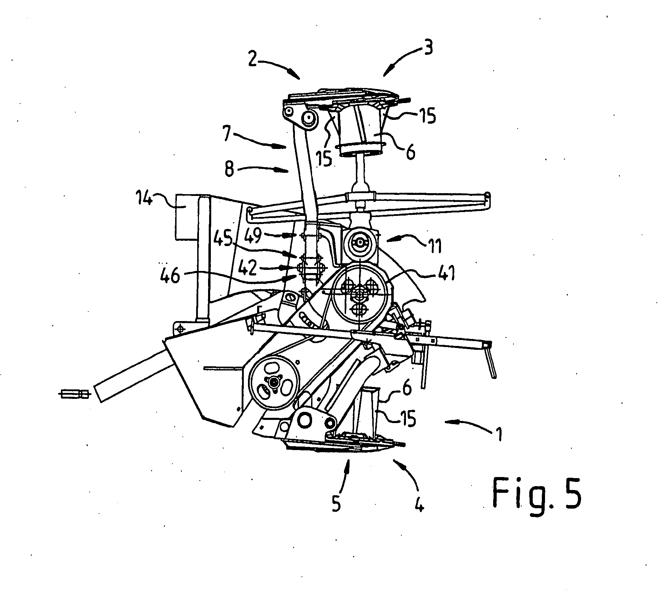

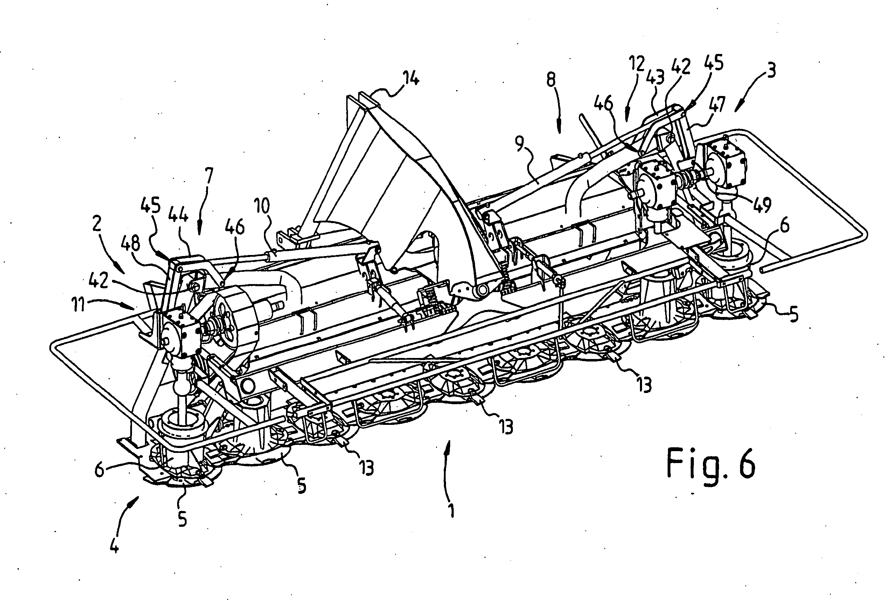

In Fig. 5 ist eine Seitenansicht der zweiten Variante des erfindungsgemäßen Scheibenmähwerks dargestellt und in Fig. 6 eine perspektivische Darstellung der zweiten Variante in der Arbeitsstellung.

Weiterhin sind bei der zweiten Variante die Mähscheiben 5 der beiden Seitenmähwerke 2 ebenfalls mit einer Trommel 6 mit Förderelementen 15 ausgestaltet, so dass diese abgemähtes Mähgut in Richtung zum Hauptmähwerk 1 bzw. in Richtung Mitte befördern. Dementsprechend wird abgemähtes Mähgut aus dem Bereich vor den Laufrädern der nicht näher dargestellten Zugmaschine wegbefördert, so dass dieses im Bereich zwischen den Laufrädern zum Liegen kommt.

Das Haupt- bzw. Frontmähwerk 1 ist ein sogenanntes Scheibenmähwerk, d. h. es umfasst scheibenförmige, untenliegende Mähscheiben bzw. -werkzeuge 5 mit Schneidmessern 13, die phasenversetzt so rotieren, dass die Flugkreise der Schneidmesser 13 sich überlappen.

Unter einer an die Dreipunktaufnahme 14 für den Frontanbau an ein Fahrzeug sich anschließende Abdeckung ist ein Verteilergetriebe angeordnet, das in den Darstellungen durch die Abdeckung verdeckt ist. Von dem Verteilergetriebe erstreckt sich auf einer Seite eine nicht näher dargestellte Gelenkwelle zu einem Winkelgetriebe 40, über dass die äußerste Mähscheibe 5 des Frontmähwerks 1 und somit der sich unterhalb der Mähscheiben 5 erstreckende Antriebsbalken 4 des Frontmähwerks 1 angetrieben wird.

Auf der gegenüberliegenden Seite ist ein Riemengetriebe 41 über eine ebenfalls nicht näher dargestellte Gelenkwelle, über das Verteilergetriebe angetrieben. Das Riemengetriebe 41 dient für den Antrieb eines dem Frontmähwerk 1 nachgeschalteten Konditionierers bzw. Aufbereiters. Diese Anordnung entspricht im Wesentlichen bekannten Frontmähwerken in Form eines sog. Scheibenmähwerks.

Nunmehr sind außenseitig zwei Seitenmähwerke 2, 3 anges-etzt, die über Schwenkachsen 42 schwenkbar sind, die im Wesentlichen horizontal liegen. Arbeitszylinder 9, 10 dienen als Antrieb für den Übergang zwischen der Arbeitsstellung und der Transportstellung. Um eine Transportstellung zu erzielen, die innerhalb der Breite B des Frontmähwerks 1 liegt, werden die Seitenmähwerke 2, 3 dabei jeweils über einen Doppelgelenkhebel 43, 44 angehoben, so dass sich bei vergleichsweise kleinem Hub der Arbeitszylinder 9, 10 ein großer Schwenkwinkel ergibt.

Die Doppelgelenkhebel 43, 44 weisen endseitig jeweils Drehachsen 45, 46 auf, die mittels Hebel 47, 48 und einer vierten Drehachse 49 ein Parallelogramm- bzw. Trapez-Hebelmechanismus bilden.

Wie insbesondere in Fig. 1 erkennbar ist, beträgt der Schwenkwinkel hier in etwa 90°, wobei die Drehachse so gelegt ist, dass die Seitenmähwerke 2, 3 sich deutlich innerhalb der Maximalbreite des Frontmähwerks 2 befinden. Dies ermöglicht vor allem die vorteilhafte Ausbildung des zuvor erläuterten Parallelogramm- bzw. Trapez-Hebelmechanismuses. Die Seitenmähwerke 2, 3 führen eine geführte Bahnkurve während der Verschwenkung zwischen den beiden Endstellungen aus.

Vorliegend bestehen die Seit enmähwerke 2, 3 lediglich aus einer einzelnen Mähscheibe 5, grundsätzlich kann jedoch an dieser Stelle ohne Weiteres ein breiteres Seitenmähwerk vorgesehen werden. Auch eine mehrfach faltbare Anordnung, bei der sich an ein Seitenmähwerk 2, 3 ein weiteres Seitenmähwerk anschließt, ist durchaus denkbar.

Die Mähscheiben 5 der Seitenmähwerke 2, 3, die dementsprechend den äußersten Mähscheiben 5 des Frontmähwerks 1 benachbart liegen, sind in der Arbeitsstellung gemäß Fig. 3 so angeordnet, dass sich die Flugkreise der jeweiligen Schneidmesser 13 überlappen, so dass sich ein durchgehendes Schnittbild über die gesamte Arbeitsbreite der Mähmaschine ergibt.

Erfindungsgemäß sind die Seitenmähwerke 2, 3 an den außenliegenden Antrieb des Frontmähwerks 1 angeschlossen. Das Seitenmähwerk 3 umfasst hierzu ein Winkelgetriebe 22 für den Antrieb der Mähscheibe 5, dessen Antriebswelle 23 in einer Klaue 24 einer Klauenkupplung 12 endet. Die hierzu korrespondierende Klaue 26 ist mit einer Abtriebswelle 27 des Winkelgetriebes 22 verbunden. Auf diese Weise ist das Seitenmähwerk 3 auf kürzestem Weg unmittelbar mit dem außenliegenden Antrieb des Frontmähwerks 1 gekoppelt.

Beim Übergang in die Transportstellung löst sich die Klauenkupplung 11, 12 selbsttätig, so dass die Klauen.24, 26 weit voneinander beabstandet sind. Es ist ohne Weiteres erkennbar, dass eine derartige Schwenkbewegung, wie es das Seitenmähwerk 2, 3 durchführt, in Verbindung mit einem Anschluss an das Winkelgetriebe 22 ohne lösbare Kupplung 11, 12 schwer zu bewerkstelligen wäre.

Auf der gegenüberliegenden Seite ist das Seitenmähwerk 2 ebenfalls mit einem Winkelgetriebe 28 versehen, dass die Mähscheibe 5 antreibt. Die Antriebswelle 29 des Winkelgetriebes 28 endet wiederum in einer.Klaue 30 der Klauenkupplung 11. Die zur Klaue 30 korrespondierende Klaue 32 der Klauenkupplung 11 ist am Ende einer Abtriebswelle 33 des Riemengetriebes 41 angebracht. Auch hier löst sich die Klauenkupplung 11 selbsttätig beim Übergang in die Transportstellung entsprechend der vorbeschriebenen Vorgehensweise des Seitenmähwerks 2.

Das Frontmähwerk 1 wird für den übergang in die Transportstellung lediglich vom Boden abgehoben, wozu in dieser Ausführung der Erfindung die normale Frontaufnahme eines Traktors mit dazugehöriger Hydraulik verwendbar ist.

Der erfindungsgemäße Anschluss der Antriebe der Seitenmähwerke 2, 3 an das Frontmähwerk 1 kann auch bei nicht mechanischem, sondern beispielsweise hydraulischem oder elektrischem Antrieb in vorteilhafter Weise verwirklicht werden. Die unmittelbare Nähe der Seitenmähwerke 2, 3 bzw. deren Antriebseinheiten 22, 28 zu den außenliegenden Antriebseinheiten 40, 41 des Frontmähwerks 1 kann in jedem Fall für den Anschluss von den Seitenmähwerken 2, 3 verwendet werden, so dass die Überbrückung von einem zentralen, über das Fahrwerk getriebenen Antriebselement zur Außenseite des Frontmähwerks 1 auch für Seitenmähwerke 2, 3 genutzt wird.

Auch nicht mechanische Antriebsanschlüsse können dabei lösbar über entsprechende Kupplungen oder permanent angeschlossene.. flexible Leitungen realisiert werden.

Die erfindungsgemäße Mähmaschine erlaubt einen leichten. Aufbau eines Mähwerks mit gegenüber der Transportstellung vergrößerter Arbeitsbreite und nutzt dabei insbesondere in vorteilhafter Weise die Möglichkeit des Antriebsanschlusses an der Außenseite des Frontmähwerks 1. Durch eine Mähmaschine gemäß der Erfindung kann zuverlässig vermieden werden, dass ein eine Mähmaschine tragendes Fahrzeug in Schrägfahrt oder in Kurvenfahrt noch nicht gemähtes Erntegut überfährt und niederdrückt.

### Bezugszeichenliste

- 1: Hauptmähwerk
- 2: Seitenmähwerk
- 3: Seitenmähwerk
- 4: Mähbalken
- 5: Mähscheibe
- 6: Trommel
- 7: Klappvorrichtung
- 8: Klappvorrichtung
- 9: Zylinder
- 10: Zylinder
- 11: Kupplung
- 12: Kupplung
- 13: Messer
- 14: Aufhängung
- 15: Element
- 22: Winkelgetriebe
- 23: Antriebswelle
- 24: Klaue
- 26: Klaue
- 27: Abtriebswelle
- 28: Winkelgetriebe
- 29: Antriebswelle
- 30: Klaue
- 32: Klaue
- 33: Abtriebswelle
- 40: Winkelgetriebe
- 41: Riemengetriebe
- 42: Schwenkachse
- 43: Doppelgelenkhebel
- 44: Doppelgelenkhebel
- 45: Drehachse
- 46: Drehachse
- 47: Hebel
- 48: Hebel
- 49: Drehachse

- B: Breite

## Patentansprüche

1. Mähmaschine für ein landwirtschaftliches Fahrzeug zur frontseitigen Anordnung mit einem Frontmähwerk (1) und mit wenigstens einem für den Übergang zwischen einer Transportstellung und einer Arbeitsstellung gegenüber dem Frontmähwerk (1) beweglich angeordnetem zweiten Seitenmähwerk (2, 3), **dadurch gekennzeichnet, dass** das Frontmähwerk (1) als Scheibenmähwerk (1) mit außenliegendem Antrieb (40, 41) für die Mähwerkzeuge (5, 13) ausgebildet ist und der Antrieb (22, 28) des Seitenmähwerks (2, 3) wenigstens in Arbeitsstellung an den außenliegenden Antrieb (40, 41) des Frontmähwerks (1) angeschlossen ist.

2. Mähmaschine nach Anspruch 1 **dadurch gekennzeichnet, dass** das Frontmähwerk (1) mittig vor dem Fahrzeug anbringbar und mit einer in Transportstellung gegenüber der Arbeitsstellung unveränderten Breite (B) ausgebildet ist.

3. Mähmaschine nach einem der vorgenannten Ansprüche
**dadurch gekennzeichnet, dass** die Transportbreite (B) des Frontmähwerks (1) der Breite (B) des dafür vorgesehenen Fahrzeugs entspricht.

4. Mähmaschine nach einem der vorgenannten Ansprüche
**dadurch gekennzeichnet, dass** der Antrieb (22, 28) des Seitenmähwerks (2, 3) wenigstens in Arbeitsstellung an ein außenliegendes Getriebe (40, 41) des Frontmähwerks (1) angeschlossen ist.

5. Mähmaschine nach einem der vorgenannten Ansprüche
**dadurch gekennzeichnet, dass** eine lösbare Kupplung (11, 12) zwischen dem Antrieb (40, 41) des Frontmähwerks (1) und dem. Antrieb (22, 28) des Seitenmähwerks (2, 3) vorgesehen ist.

6. Mähmaschine nach einem der vorgenannten Ansprüche
**dadurch gekennzeichnet, dass** die Kupplung (11, 12) selbsttätig beim Übergang von der Arbeitsstellung in die Transportstellung lösbar und/oder beim Übergang von der Transportstellung in die Arbeitsstellung schließbar ist.

7. Mähmaschine nach einem der vorgenannten Ansprüche
**dadurch gekennzeichnet, dass** die Kupplung (11, 12) nur in bestimmter Phasenlage zwischen den Mähwerkzeugen (5, 13) des Frontmähwerks (1) und den Mähwerkzeugen (5, 13) des Seitenmähwerks (2, 3) schließbar ist.

8. Mähmaschine nach einem der vorgenannten Ansprüche
**dadurch gekennzeichnet, dass** die Kupplung (11, 12) als Klauenkupplung (11, 12) ausgebildet ist.

9. Mähmaschine nach einem der vorgenannten Ansprüche
**dadurch gekennzeichnet, dass** zwei bezüglich einer Drehung um 180° symmetrische Schließstellungen der Kupplung (11, 12) vorgesehen sind.

10. Mähmaschine nach einem der vorgenannten Ansprüche
**dadurch gekennzeichnet, dass** das Seitenmähwerk (2, 3) in der Transportstellung innerhalb der Transportbreite (B) des Frontmähwerks (1) liegt.

11. Mähmaschine nach einem der vorgenannten Ansprüche
**dadurch gekennzeichnet, dass** wenigstens ein Mähwerk (1, 2, 3) beim Übergang zwischen der Arbeitsstellung und der Transportstellung um wenigstens eine Schwenkachse (42, 45, 46, 49) schwenkbar ist.

12. Mähmaschine nach einem der vorgenannten Ansprüche
**dadurch gekennzeichnet, dass** das erste und/oder zweite Seitenmähwerk (2, 3) um wenigstens eine im Wesentlichen in Fahrtrichtung stehende, horizontal angeordnete Schwenkachse (42, 45, 46, 49) schwenkbar ist.

13. Mähmaschine nach einem der vorgenannten Ansprüche
**dadurch gekennzeichnet, dass** wenigstens ein Mähwerk (1, 2, 3) beim Übergang zwischen der Arbeitsstellung und der Transportstellung um vier voneinander beabstandete Schwenkachsen (42, 45, 46, 49) schwenkbar ist.

14. Mähmaschine nach einem der vorgenannten Ansprüche
**dadurch gekennzeichnet, dass** das erste und/oder zweite Seitenmähwerk (2, 3 um vier voneinander beabstandete, im Wesentlichen in Fahrtrichtung stehende, horizontal angeordnete Schwenkachse (42, 45, 46, 49) schwenkbar ist.

15. Mähmaschine nach einem der vorgenannten Ansprüche
**dadurch gekennzeichnet, dass** das Seitenmähwerks (2, 3) beim Übergang zwischen Transport- und Arbeitsstellung um einen Schwenkwinkel von im Wesentlichen 90° schwenkbar ist.

16. Mähmaschine nach einem der vorgenannten Ansprüche
**dadurch gekennzeichnet, dass** sich die Flugkreise der zueinander benachbarten Mähwerkzeuge (5, 13) des Front- und des Seitenmähwerks (1, 2, 3) in Arbeitsstellung überlappen.

17. Mähmaschine nach einem der vorgenannten Ansprüche
**dadurch gekennzeichnet, dass** ein dem Antrieb (22, 28) des ersten Seitenmähwerks (2, 3) entsprechend angetriebenes zweites Seitenmähwerk (3, 2) auf der dem ersten Seitenmähwerk gegenüberliegenden Seite des Frontmähwerks (1) vorgesehen ist.

18. Mähmaschine nach einem der vorgenannten Ansprüche
**dadurch gekennzeichnet, dass** die Mähwerke (1, 2, 3) wenigstens in Arbeitsstellung auf einer Höhe bezogen auf die Fahrtrichtung angeordnet sind.

19. Mähmaschine nach einem der vorgenannten Ansprüche
**dadurch gekennzeichnet, dass** sie zum Anbau an eine Maschinenaufnahme eines Traktors ausgebildet ist.

20. Landwirtschaftliches Fahrzeug **dadurch gekennzeichnet, dass** es eine Mähmaschine nach einem der vorgenannten Ansprüche aufweist.

## Claims

1. Mowing machine for attachment onto the front of an agricultural vehicle with a front mower (1) and with at least one second side mower (2, 3) arranged to be movable relative to the front mower (1) for the transition between a transport position and an operating position, **characterised in that** the front mower (1) is designed as a disc mower (1) with an outerlying drive (40, 41) for the mower tools (5, 13) and the drive (22, 28) of the side mower (2, 3) is connected at least in operating position to the outerlying drive (40, 41) of the front mower (1).

2. Mowing machine according to claim 1, **characterised in that** the front mower (1) can be attached centrally in front of the vehicle and is designed to have a width (B) that is unchanged relative to the operating position in transport position.

3. Mowing machine according to one of the preceding claims, **characterised in that** the transport width (B) of the front mower (1) corresponds to the width (B) of the vehicle provided therefor.

4. Mowing machine according to one of the preceding claims, **characterised in that** the drive (22, 28) of the side mower (2, 3) is connected at least in operating position to an outerlying gear (40, 41) of the front mower (1).

5. Mowing machine according to one of the preceding claims, **characterised in that** a detachable coupling (11, 12) is provided between the drive (40, 41) of the front mower (1) and the drive (22, 28) of the side mower (2,3).

6. Mowing machine according to one of the preceding claims, **characterised in that** the coupling (11, 12) is automatically detachable during the transition from the operating position into the transport position and/or can be connected during the transition from the transport position Into the operating position.

7. Mowing machine according to one of the preceding claims, **characterised in that** the coupling (11, 12) can be connected only in a specific phase position between the mowing tools (5, 13) of the front mower (1) and the mowing tools (5, 13) of the side mower (2, 3).

8. Mowing machine according to one of the preceding claims, **characterised in that** the coupling (11, 12) is designed in the form of a claw coupling (11, 12).

9. Mowing machine according to one of the preceding claims, **characterised in that** two connected positions of the coupling (11, 12) are provided that are symmetrical to rotation about 180°.

10. Mowing machine according to one of the preceding claims, **characterised in that** the side mower (2, 3) In the transport position lies within the transport width (B) of the front mower (1).

11. Mowing machine according to one of the preceding claims, **characterised in that** at least one mower (1, 2, 3) during the transition between the operating position and the transport position can be pivoted about at least one pivot axis (42, 45, 46, 49).

12. Mowing machine according to one of the preceding claims, **characterised in that** the first and/or second side mower (2, 3) can be pivoted about at least one pivot axis (42, 45, 46, 49) arranged horizontally and substantially in travelling direction.

13. Mowing machine according to one of the preceding claims, **characterised in that** at least one mower (1, 2, 3) during the transition between the operating position and the transport position can be pivoted about four spaced apart pivot axes (42, 45, 46, 49).

14. Mowing machine according to one of the preceding claims, **characterised in that** the first and/or second side mower (2, 3) can be pivoted about four spaced apart pivot axes (42, 45, 46, 49) arranged horizontally and substantially in travelling direction.

15. Mowing machine according to one of the preceding claims, **characterised in that** the side mower (2, 3) during the transition between the transport and operating position can be pivoted about a pivot angle of essentially 90°.

16. Mowing machine according to one of the preceding claims, **characterised in that** the flying circles of the adjacent mowing tools (5, 13) of the front and side mower (1, 2, 3) overlap in operating position.

17. Mowing machine according to one of the preceding claims, **characterised in that** a second side mower (3, 2) driven according to the drive (22, 28) of the first side mower (2, 3) is provided on the side of the front mower (1) opposite the first side mower.

18. Mowing machine according to one of the preceding claims, **characterised in that** the mowers (1, 2, 3 ) are arranged at least in operating position at one height in relation to the travelling direction.

19. Mowing machine according to one of the preceding claims, **characterised in that** it is designed to attach onto a machine mount of a tractor.

20. Agricultural vehicle **characterised in that** it comprises a mowing machine according to one of the preceding claims.

## Revendications

1. Faucheuse frontale installée sur un véhicule à usage agricole comportant un dispositif frontal de fauche (1) et au moins un second dispositif latéral de fauche (2, 3) monté de manière mobile entre une position de transport et une position de travail par rapport au dispositif frontal de fauche (1),
**caractérisée en ce que**
le dispositif frontal de fauche (1) est un dispositif de fauche à disques (1) comportant un moyen d'entraînement (40, 41) situé à l'extérieur pour les organes de fauche (5, 13), et
au moins en position de travail le moyen d'entraînement (22, 28) du dispositif latéral de fauche (2, 3) est relié au moyen d'entraînement (40, 41) situé à l'extérieur, du dispositif frontal de fauche (1).

2. Faucheuse selon la revendication 1,
**caractérisée en ce que**
le dispositif frontal de fauche (1) est installé au milieu et devant le véhicule et il a une largeur invariable (B) en position de transport par rapport à la position de travail.

3. Faucheuse selon l'une des revendications précédentes,
**caractérisée en ce que**
la largeur de transport (B) du dispositif frontal de fauche (1) correspond à la largeur (B) du véhicule qu'il équipe.

4. Faucheuse selon l'une des revendications précédentes,
**caractérisée en ce que**
le moyen d'entraînement (22, 28) du dispositif latéral de fauche (2, 3) est relié à une transmission (40, 41) située à l'extérieur du dispositif frontal de fauche (1), au moins en position de travail.

5. Faucheuse selon l'une des revendications précédentes,
**caractérisée par**
un embrayage (11, 12) entre le moyen d'entraînement (40, 41) du dispositif frontal de fauche (1) et le moyen d'entraînement (22, 28) du dispositif latéral de fauche (2, 3).

6. Faucheuse selon l'une des revendications précédentes,
**caractérisée en ce que**
l'embrayage (11, 12) débraye automatiquement au passage de la position de travail à la position de transport et/ou se ferme au passage de la position de transport à la position de travail.

7. Faucheuse selon l'une des revendications précédentes,
**caractérisée en ce que**
l'embrayage (11, 12) n'est fermé que dans une certaine phase entre les organes de fauche (5, 13) du dispositif frontal de fauche (1) et les organes de fauche (5, 13) du dispositif latéral de fauche (2, 3).

8. Faucheuse selon l'une des revendications précédentes,
**caractérisée en ce que**
l'embrayage (11, 12) est réalisé sous la forme d'un embrayage à griffes (11, 12).

9. Faucheuse selon l'une des revendications précédentes,
**caractérisée par**
deux positions de fermeture de l'embrayage (11, 12) symétrique en rotation à 180°.

10. Faucheuse selon l'une des revendications précédentes,
**caractérisée en ce que**
le dispositif latéral de fauche (2, 3) se situe à l'intérieur de la largeur de transport (B) du dispositif frontal de fauche (1) en position de transport.

11. Faucheuse selon l'une des revendications précédentes,
**caractérisée en ce qu'**
au passage entre la position de travail et la position de transport, au moins un dispositif de fauche (1, 2, 3) pivote autour d'au moins un axe de pivotement (42, 45, 46, 49).

12. Faucheuse selon l'une des revendications précédentes,
**caractérisée en ce que**
le premier et/ou le second dispositif latéral de fauche (2, 3) est pivotant autour d'au moins un axe de pivotement (42, 45, 46, 49) au moins pratiquement horizontal par rapport à la direction de déplacement.

13. Faucheuse selon l'une des revendications précédentes,
**caractérisée en ce qu'**
au passage entre la position de travail et la position de transport, au moins un dispositif de fauche (1, 2, 3) est pivotant autour de quatre axes de pivotement (42, 45, 46, 49) écartés les uns des autres.

14. Faucheuse selon l'une des revendications précédentes,
**caractérisée en ce que**
le premier et/ou le second dispositif latéral de fauche (2, 3) peuvent pivoter autour de quatre axes de pivotement (42, 45, 46, 49) installés horizontalement, pratiquement dans la direction de déplacement et écartés les uns des autres.

15. Faucheuse selon l'une des revendications précédentes,
**caractérisée en ce qu'**
au passage entre sa position de transport et sa position de travail, le dispositif latéral de fauche (2, 3) pivote selon un angle de pivotement qui correspond pratiquement à 90°.

16. Faucheuse selon l'une des revendications précédentes,
**caractérisée en ce que**
les trajectoires des organes de fauche (5, 13) adjacents du dispositif frontal et du dispositif latéral de fauche (1, 2, 3), se chevauchent en position de travail.

17. Faucheuse selon l'une des revendications précédentes,
**caractérisée par**
un second dispositif latéral de fauche (3, 2) entraîne, correspondant au moyen d'entraînement (22, 28) du premier dispositif latéral de fauche (2, 3) sur le côté du dispositif frontal de fauche (1), en regard du premier dispositif latéral de fauche.

18. Faucheuse selon l'une des revendications précédentes,
**caractérisée en ce qu'**
au moins en position de travail, les dispositifs de fauche (1, 2, 3) sont installés à une hauteur rapportée à la direction de travail.

19. Faucheuse selon l'une des revendications précédentes,
**caractérisée en ce qu'**
elle est destinée à être montée dans un dispositif d'attelage de machine d'un tracteur.

20. Véhicule à usage agricole **caractérisé en ce qu'**il comporte une faucheuse selon l'une des revendications précédentes.
